# FASCICULE DE BREVET EUROPEEN

(11) **EP 2 185 385 B1**
(45) Date de publication et mention de la délivrance du brevet: **20.06.2012**
(21) Numéro de dépôt: 08835461.8
(22) Date de dépôt: 04.09.2008
(51) Int. Cl.: B60R 19/18

(54) **ELEMENT POUR STRUCTURE AVANT ET/OU ARRIERE DE VEHICULE AUTOMOBILE**
ELEMENT FÜR DIE VORDER- UND/ODER HINTERSTRUKTUR EINES AUTOMOBILS
MEMBER FOR FRONT AND/OR REAR STRUCTURE OF AUTOMOBILE

(30) Priorité: 07.09.2007 FR 0706257
(43) Date de publication de la demande: 19.05.2010
(73) Titulaire: Renault S.A.S., 92100 Boulogne-Billancourt (FR)
(72) Inventeur: BIGNON, Yannick, F-92290 Chatenay Malabry (FR)
(86) Numéro de dépôt international: PCT/FR2008/051575
(87) Numéro de publication internationale: WO 2009/044044

(56) Documents cités:
- EP-A- 1 733 927
- DE-A1-102005 020 730
- FR-A- 2 871 122
- US-B1- 6 290 272

## Description

L'invention concerne la structure d'une partie avant ou arrière d'un véhicule automobile. Elle concerne plus particulièrement un élément d'une telle structure avant ou arrière adapté pour les situations de choc piéton. Elle concerne aussi un agencement de la partie avant ou arrière d'un véhicule automobile. Enfin, elle concerne un véhicule automobile en tant que tel équipé d'un tel agencement.

La structure des parties avant et/ou arrière d'un véhicule automobile a pour fonction de traiter trois types de chocs. Les petits chocs dits « piétons » qui génèrent peu d'énergie à absorber, les chocs plus violents mais à faible vitesse dits chocs « Danner » pour lesquels l'objectif est d'obtenir un minimum de déformation de la structure, puis les chocs plus extrêmes dits « crash », qui entraînent des déformations importantes du véhicule et pour lesquels l'objectif est la protection de l'habitacle pour épargner les passagers.

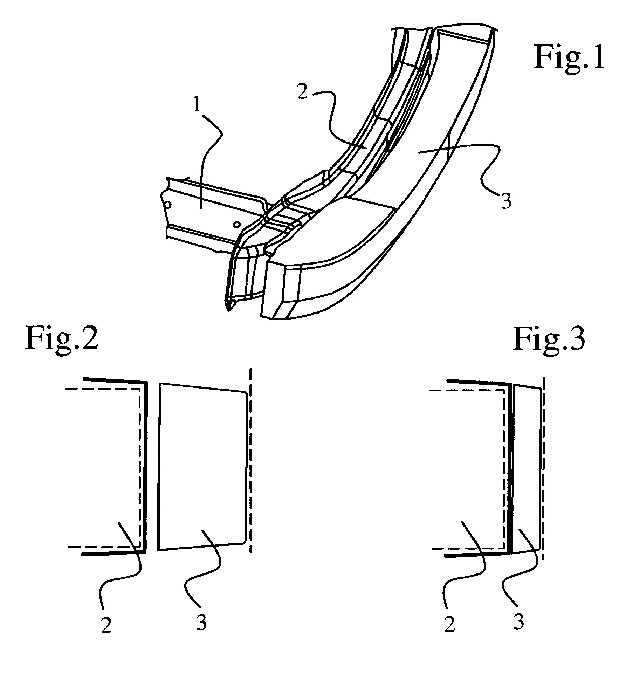

Pour répondre à ces différentes situations, une structure classique avant ou arrière d'un véhicule automobile, illustrée sur les figures 1 à 3, repose sur deux longerons 1 latéraux s'étendant dans la direction longitudinale avant-arrière du véhicule automobile, à l'extrémité desquels s'étend une traverse 2. Cette traverse est destinée à absorber toute l'énergie des chocs « Danner », laissant intacts les longerons 1, qui ne se déforment que lors des crashs pour protéger l'habitacle. Pour répondre aux chocs « piétons », il est usuel de disposer un matériau mou comme de la mousse 3 sur l'avant de la traverse, fixé sur la traverse Danner par exemple par clipsage. Lors d'un choc, la mousse est compressée comme illustré sur la figure 3. Cette solution présente un premier inconvénient de heurter toutefois un piéton de manière trop violente lors d'un choc, et un second inconvénient d'être encombrante car la mousse 3 occupe un volume important.

Enfin, un bouclier, non représenté, est fixé de sorte de recouvrir ces éléments, et s'étend depuis la partie avant ou arrière de cette structure par une première partie sensiblement verticale jusque sur sa face supérieure par une seconde partie sensiblement horizontale où il vient en liaison avec le reste du véhicule, en général le capot à l'avant et le coffre à l'arrière, pour obtenir un aspect esthétique attrayant de la partie avant ou arrière du véhicule vu depuis l'extérieur. Il est connu de disposer une poutre support de bouclier sur la partie haute et arrière de la structure, sous la seconde partie sensiblement horizontale du bouclier, pour la soutenir quand une charge est positionnée sur sa surface supérieure. Une telle charge peut par exemple être provoquée par l'appui d'un pied ou d'un genou, ou l'appui d'un bagage à l'arrière. Enfin, ces structures avant ou arrière de véhicules dépendent de nombreuses autres contraintes d'ordre esthétique, économique, qui s'ajoutent aux contraintes mécaniques explicitées ci-dessus. Ainsi, ces structures doivent en général présenter un faible encombrement et s'adapter à différents types de formes esthétiques des véhicules automobiles. Les solutions existantes n'atteignent que des compromis insatisfaisants. Notamment, elles sont insatisfaisantes pour leur réponse concernant les chocs « piétons », particulièrement à une hauteur correspondant au tibia d'un piéton, pour lesquels les exigences imposées par la législation augmentent fortement.

Fr 2871 122 A décrit un élément pour structure avant et/ou arrière selon le préambule de la revendication 1.

Il existe donc un besoin d'une structure avant ou arrière de véhicule automobile améliorée, représentant un compromis optimisé pour répondre aux contraintes mécaniques, esthétiques et économiques s'imposant aux véhicules automobiles.

Plus particulièrement, un premier objet principal de l'invention est une structure avant et/ou arrière pour véhicule automobile permettant une réaction optimale dans le cas d'un choc piéton, notamment à une hauteur correspondant au tibia du piéton.

Un second objet de l'invention est une structure avant et/ou arrière pour véhicule automobile permettant d'atteindre une résistance satisfaisante aux contraintes verticales, subies par un appui sur leur surface supérieure.

Un troisième objet de l'invention est une structure avant et/ou arrière pour véhicule automobile à encombrement réduit et dont l'aspect esthétique est attractif.

Un quatrième objet de l'invention est une structure avant et/ou arrière économique pour véhicule automobile.

L'invention repose sur un élément pour structure avant et/ou arrière de véhicule automobile, destiné à venir en contact avec un bouclier de véhicule automobile, comprenant au moins une arche présentant deux axes de liaison et une partie arrondie orientée vers l'extrémité de l'élément, de sorte de remplir une fonction technique de fusible qui casse lors d'un choc avec un piéton, par sa fissuration au niveau de sa partie centrale, pour laisser s'enfoncer le bouclier vers l'intérieur du véhicule avec très peu ou pas de résistance et une fonction technique de support du bouclier selon une direction verticale, avant et après ledit choc.

L'arche peut être en matériau plastique rigide de faible ductilité ou en matériau composite chargé de fibres de verre. Elle peut présenter une forme proche d'une portion de demi-cylindre. Ses deux axes de liaison peuvent former une liaison souple de type charnière. Ils peuvent être inclinés pour favoriser la rotation des demi-arches après la cassure de l'arche sous l'effet d'un choc, de manière à permettre l'enfoncement du bouclier sous l'effet du choc. Le contour supérieur de l'arche peut être incliné vers le bas de sorte que la partie arrondie extrême de l'arche présente une hauteur plus petite que celle des axes de liaison. L'arche peut comprendre des ouvertures ou des troncatures dans sa paroi pour prédéterminer sa ligne de cassure. Enfin, l'arche peut présenter une dissymétrie gauche droite.

L'invention porte aussi sur un agencement d'une structure avant et/ou arrière d'un véhicule automobile comprenant une traverse Danner et un bouclier, caractérisé en ce qu'il comprend un élément support tel que décrit précédemment disposé entre la traverse Danner et le bouclier.

L'invention porte aussi sur un véhicule automobile caractérisé en ce qu'il comprend un tel agencement, qui peut être tel qu'au moins une arche se trouve à une hauteur correspondant au tibia d'un piéton.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective partielle de dessus d'une structure avant ou arrière d'un véhicule automobile selon l'état de la technique.
La figure 2 représente une vue en coupe de la section de la structure selon l'état de la technique.
La figure 3 représente une vue en coupe de la section de la structure selon l'état de la technique compressée par un choc piéton.
La figure 4 représente une vue en perspective de dessus d'un élément de structure avant ou arrière de véhicule automobile selon un mode d'exécution de l'invention.

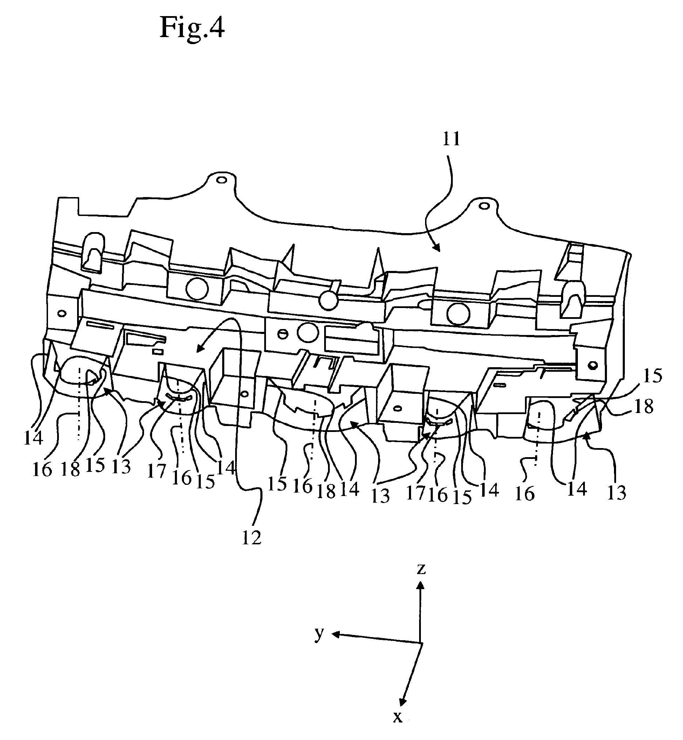

L'invention est illustrée dans le cadre d'une implémentation sur la partie avant d'un véhicule automobile, et repose sur un élément intégré illustré sur la figure 4. Elle pourrait toutefois aussi être implémentée sur la partie arrière du véhicule automobile et par la réunion de plusieurs éléments distincts permettant d'obtenir un assemblage équivalent à celui obtenu par l'élément intégré illustré sur la figure. Nous entendrons ci-dessous par direction longitudinale x la direction dans le sens du véhicule automobile sur lequel cet élément intégré est destiné à être monté, de l'arrière vers l'avant. Nous entendrons par direction transversale y une direction horizontale et perpendiculaire à la direction longitudinale. Enfin, nous entendrons par direction verticale z la direction perpendiculaire aux deux précédentes qui définissent un plan horizontal.

L'élément intégré illustré sur la figure 4 comprend deux parties, une partie supérieure arrière 11 qui correspond à une partie de structure se trouvant au niveau du capot du véhicule automobile et sur laquelle l'invention ne porte pas. Il comprend de plus une seconde partie inférieure avant 12, qui correspond à une partie de la structure avant du véhicule automobile destinée à traiter les chocs. Cette partie avant inférieure 12 est destinée à se positionner entre une traverse Danner classique et le bouclier de la structure avant du véhicule automobile.

Cette partie avant 12 comprend dans son extrémité antérieure plusieurs arches 13 arrondies, qui présentent des formes proches de parties de demi-cylindres verticaux, dont la partie arrondie est orientée vers l'avant. La partie arrière de ces arches comprend deux axes de liaison 14 reliés à une partie arrière de la structure en liaison avec la traverse Danner qui remplit la fonction d'absorption d'énergie en cas de chocs.

Ces arches 13 sont destinées à se trouver à une hauteur correspondant au tibia d'un piéton. Elles remplissent deux fonctions techniques :
- elles assurent la gestion des chocs piéton ;
- elles assurent une résistance verticale aux efforts exercés sur le dessus du bouclier.

Pour remplir efficacement ces deux fonctions, les arches 13 sont dans un matériau très cassant, très peu ductile, de sorte de casser immédiatement lors d'un choc contre le tibia d'un piéton, par leur fissuration au niveau de la partie centrale avant de l'arche. Pour cela, un plastique chargé de fibres de verre et une faible épaisseur de la paroi de 1,5 mm convient bien, pour des arches de diamètre compris entre 40 et 90 millimètres selon la direction y et entre 40 et 45 millimètres selon la direction z. Pour orienter cette fissuration, ces arches présentent avantageusement un contour supérieur 15 incliné, descendant vers l'avant. Elles présentent ainsi une hauteur plus petite sur la partie avant arrondie susceptible de recevoir directement les chocs, qui est ainsi plus fragile et destinée à se fissurer. Pour prédéterminer cette fissuration, les arches peuvent de plus comprendre des ouvertures 17 ou des troncatures 18 de leur paroi vers leur partie antérieure.

De plus, les arches présentent avantageusement une dissymétrie gauche droite dans la direction y, leur axe 16 le plus en avant, susceptible de heurter un obstacle en premier, ne se trouvant pas exactement dans un plan longitudinal vertical x-z passant au centre des deux axes de liaison 14. Cette dissymétrie augmente pour les arches disposées sur les côtés de l'élément avant 12 pour mieux répondre à des chocs de côté. La dissymétrie favorise le pliage des demi-arches cassées sur le côté lors d'un choc. Pour augmenter cet effet, les arches 13 comprennent une liaison de type charnière au niveau de leurs axes de liaison arrière 14 qui favorise leur déplacement par une sorte de rotation sous l'effet d'un choc avant. Enfin, pour accentuer encore cet effet, ces axes 14 ne sont pas verticaux mais inclinés par rapport à la verticale. Ainsi, les arches ont une forme qui correspond plus exactement à une forme intermédiaire entre une portion de cylindre et une portion de cône.

Ainsi, lors d'un choc avec un piéton, les arches 13 cassent immédiatement vers leur axe antérieur 16 programmé à se fissurer, se séparent en deux parties qui s'effacent latéralement par rotation autour des axes arrière 14 pour se positionner contre la partie arrière de la structure sans offrir de résistance, en permettant ainsi au bouclier souple de reculer dans la direction longitudinale x dans l'espace ainsi libéré par les arches 13 sans exercer d'effort sur le tibia et donc sans trop heurter le tibia. Le bouclier est ainsi apte à un déplacement maximal jusqu'à venir en butée sur la traverse arrière.

Les arches 13 ont une forme qui correspond à celle du bouclier, qui vient en appui sur la partie avant 16 des arches et sur leur surface supérieure. Elles assurent ainsi un maintien de la forme du bouclier. Les arches remplissent de plus une seconde fonction technique de support d'une charge verticale. En effet, leur forme présente des parois qui présentent une hauteur suffisante pour offrir la résistance souhaitée aux possibles charges pouvant survenir sur le dessus du bouclier, comme l'appui d'un pied d'une personne, ou la charge d'un bagage en appui temporaire avant son chargement dans le coffre. Les arches sont étudiées pour remplir cette seconde fonction même après leur cassure suite à un choc puisqu'elles ne se cassent pas complètement en morceaux. En effet, même coupées en deux parties, il reste des demi-arches maintenues par leur axe arrière 14 qui conservent une résistance verticale et continuent de remplir leur seconde fonction de maintien vertical.

Cette structure avant de véhicule automobile est particulièrement adaptée à toutes sortes de formes des parties avant de véhicules automobiles. Notamment, il existe des formes de parties avant de véhicules caractérisées par des capots particulièrement allongés. Dans ces conditions, il n'y a plus d'espace pour positionner des supports verticaux habituels dans la structure avant du véhicule, entre la traverse Danner et le capot. Un élément avec arches 13 tel que décrit précédemment est alors particulièrement adapté puisqu'il représente une alternative pour remplir cette fonction manquante de support vertical, tout en restant compatible avec le volume réduit disponible.

Le mode d'exécution décrit repose sur cinq arches 13 réparties sur le front antérieur de l'élément 12, sur la largeur du véhicule. Toutefois, tout autre nombre d'arches pourrait convenir. De plus, ces arches pourront présenter d'autres formes sans sortir du concept de l'invention, à partir du moment où elles remplissent la fonction technique de traitement des chocs piétons comme des fusibles qui cassent lors d'un choc pour laisser s'enfoncer le bouclier vers l'intérieur du véhicule avec très peu de résistance.

La solution décrite atteint donc bien les objets recherchés et présente les avantages supplémentaires suivants :
- La structure du véhicule offre un comportement amélioré pour les situations de choc avec un piéton, notamment au niveau du tibia d'un piéton.
- Cette structure permet de plus de répondre aux contraintes des charges verticales sur le bouclier, avec un encombrement réduit, ce qui la rend compatible avec un plus grand nombre de formes de véhicules automobiles et particulièrement adaptée aux formes de capots allongés.
- La structure est économique, peut être fabriquée par moulage ou injection d'une seule pièce intégrée. En variante, les arches peuvent être fabriquées séparément et assemblées sur la structure avant d'un véhicule.

## Revendications

1. Elément (12) pour structure avant et/ou arrière de véhicule automobile, destiné à venir en contact avec un bouclier de véhicule automobile, comprenant au moins une arche (13) présentant deux axes de liaison (14) et une partie arrondie orientée vers l'extrémité de l'élément, **caractérisé en ce que** ladite arche remplit une fonction technique de fusible qui casse lors d'un choc avec un piéton, par sa fissuration au niveau de sa partie centrale, pour laisser s'enfoncer le bouclier vers l'intérieur du véhicule avec très peu ou pas de résistance et une fonction technique de support du bouclier selon une direction verticale, avant et après ledit choc.

2. Elément pour structure avant et/ou arrière de véhicule automobile selon la revendication 1, **caractérisé en ce que** la au moins une arche (13) est en matériau plastique rigide de faible ductilité.

3. Elément pour structure avant et/ou arrière de véhicule automobile selon la revendication 2, **caractérisé en ce que** la au moins une arche (13) est en matériau composite chargé de fibres de verre.

4. Elément pour structure avant et/ou arrière de véhicule automobile selon l'une des revendications précédentes, **caractérisé en ce que** la au moins une arche (13) présente une forme proche d'une portion de demi-cylindre.

5. Elément pour structure avant et/ou arrière de véhicule automobile selon la revendication précédente, **caractérisé en ce que** les deux axes de liaison (14) forment une liaison souple de type charnière.

6. Elément pour structure avant et/ou arrière de véhicule automobile selon la revendication précédente, **caractérisé en ce que** les deux axes de liaison (14) sont inclinés pour favoriser la rotation des demi-arches après la cassure de l'arche (13) sous l'effet d'un choc, de manière à permettre l'enfoncement du bouclier sous l'effet du choc.

7. Elément pour structure avant et/ou arrière de véhicule automobile selon l'une des revendications 5 ou 6, **caractérisé en ce que** le contour supérieur (15) de la au moins une arche (13) est inclinée vers le bas de sorte que la partie arrondie extrême (16) de la au moins une arche (13) présente une hauteur plus petite que celle des axes de liaison (14).

8. Elément pour structure avant et/ou arrière de véhicule automobile selon l'une des revendications précédentes, **caractérisé en ce que** la au moins une arche (13) comprend des ouvertures (17) ou des troncatures (18) dans sa paroi pour prédéterminer sa ligne de cassure.

9. Elément pour structure avant et/ou arrière de véhicule automobile selon l'une des revendications précédentes, **caractérisé en ce que** la au moins une arche (13) présente une dissymétrie gauche droite.

10. Agencement d'une structure avant et/ou arrière d'un véhicule automobile comprenant une traverse Danner et un bouclier, **caractérisé en ce qu'**il comprend un élément support (12) selon l'une des revendications précédentes disposé entre la traverse Danner et le bouclier.

11. Véhicule automobile **caractérisé en ce qu'**il comprend un agencement selon la revendication précédente.

12. Véhicule automobile selon la revendication précédente **caractérisé en ce que** l'agencement est tel qu'au moins une arche (13) se trouve à une hauteur correspondant au tibia d'un piéton.

## Claims

1. Member (12) for front and/or rear structure of a motor vehicle, intended to come into contact with a motor vehicle bumper, comprising at least one bow (13) having two connecting axes (14) and a rounded part facing towards the end of the member, **characterized in that** the said bow performs a technical function of acting as the deliberate weak link which breaks in an impact with a pedestrian, by cracking in its central part, in order to allow the bumper to be pushed in towards the interior of the vehicle with very little or no resistance and performs a technical function of supporting the bumper in a vertical direction, before and after the said impact.

2. Member for front and/or rear structure of a motor vehicle according to Claim 1, **characterized in that** the at least one bow (13) is made of low-ductility rigid plastic.

3. Member for front and/or rear structure of a motor vehicle according to Claim 2, **characterized in that** the at least one bow (13) is made of glass-fibre reinforced composite.

4. Member for front and/or rear structure of a motor vehicle according to one of the preceding claims, **characterized in that** the at least one bow (13) has a shape similar to a portion of a half-cylinder.

5. Member for front and/or rear structure of a motor vehicle according to the preceding claim, **characterized in that** the two connecting axes (14) form a flexible connection of the hinge type.

6. Member for front and/or rear structure of a motor vehicle according to the preceding claim, **characterized in that** the two connecting axes (14) are inclined in order to encourage the half-bows to rotate after the bow (13) has broken under the effect of an impact, so as to allow the bumper to be pushed in under the effect of the impact.

7. Member for front and/or rear structure of a motor vehicle according to one of Claims 5 and 6, **characterized in that** the upper contour (15) of the at least one bow (13) is inclined downwards so that the end rounded part (16) of the at least one bow (13) is not as tall as the connecting axes (14).

8. Member for front and/or rear structure of a motor vehicle according to one of the preceding claims, **characterized in that** the at least one bow (13) has openings (17) or truncations (18) in its wall to predetermine its break line.

9. Member for front and/or rear structure of a motor vehicle according to one of the preceding claims, **characterized in that** the at least one bow (13) has left/right asymmetry.

10. Arrangement of a front and/or rear structure of a motor vehicle comprising a Danner cross member and a bumper, **characterized in that** it comprises a support member (12) according to one of the preceding claims positioned between the Danner cross member and the bumper.

11. Motor vehicle, **characterized in that** it comprises an arrangement according to the preceding claim.

12. Motor vehicle according to the preceding claim, **characterized in that** the arrangement is such that at least one bow (13) is located at a height corresponding to pedestrian shin level.

## Patentansprüche

1. Element (12) für eine Front- und/oder Heckstruktur eines Kraftfahrzeugs, das dazu bestimmt ist, mit einem Kraftfahrzeug-Stoßfänger in Kontakt zu kommen, das mindestens einen Bogen (13) enthält, der zwei Verbindungsachsen (14) und einen zum Ende des Elements gerichteten abgerundeten Teil aufweist, **dadurch gekennzeichnet, dass** der Bogen eine technische Funktion einer Sicherung, die bei einem Zusammenstoß mit einem Fußgänger aufgrund ihres Aufreißens im Bereich ihres zentralen Teils bricht, um den Stoßfänger sich mit sehr wenig oder keinem Widerstand zur Innenseite des Fahrzeugs eindrücken zu lassen, und eine technische Funktion des Stützens des Stoßfängers in einer senkrechten Richtung vor und nach dem Zusammenstoß hat.

2. Element für eine Front- und/oder Heckstruktur eines Kraftfahrzeugs nach Anspruch 1, **dadurch gekennzeichnet, dass** der mindestens eine Bogen (13) aus steifem Kunststoff mit geringer Dehnbarkeit ist.

3. Element für eine Front- und/oder Heckstruktur eines Kraftfahrzeugs nach Anspruch 2, **dadurch gekennzeichnet, dass** der mindestens eine Bogen (13) aus mit Glasfasern angereichertem Verbundmaterial ist.

4. Element für eine Front- und/oder Heckstruktur eines Kraftfahrzeugs nach einem der vorhergehenden Ansprüche, **dadurch gekennzeichnet, dass** der mindestens eine Bogen (13) eine Form nahe einem Halbzylinderabschnitt aufweist.

5. Element für eine Front- und/oder Heckstruktur eines Kraftfahrzeugs nach dem vorhergehenden Anspruch, **dadurch gekennzeichnet, dass** die zwei Verbindungsachsen (14) eine elastische Verbindung von der Art Scharnier bilden.

6. Element für eine Front- und/oder Heckstruktur eines Kraftfahrzeugs nach dem vorhergehenden Anspruch, **dadurch gekennzeichnet, dass** die zwei Verbindungsachsen (14) geneigt sind, um die Drehung der Halbbögen nach dem Brechen des Bogens (13) unter der Wirkung eines Zusammenstoßes zu begünstigen, um das Eindrücken des Stoßfängers unter der Wirkung des Zusammenstoßes zu erlauben.

7. Element für eine Front- und/oder Heckstruktur eines Kraftfahrzeugs nach einem der Ansprüche 5 oder 6, **dadurch gekennzeichnet, dass** der obere Umriss (15) des mindestens einen Bogens (13) nach unten geneigt ist, so dass der abgerundete Endteil (16) des mindestens einen Bogens (13) eine geringere Höhe als die der Verbindungsachsen (14) hat.

8. Element für eine Front- und/oder Heckstruktur eines Kraftfahrzeugs nach einem der vorhergehenden Ansprüche, **dadurch gekennzeichnet, dass** der mindestens eine Bogen (13) Öffnungen (17) oder Verkürzungen (18) in seiner Wand hat, um seine Bruchlinie vorherzubestimmen.

9. Element für eine Front- und/oder Heckstruktur eines Kraftfahrzeugs nach einem der vorhergehenden Ansprüche, **dadurch gekennzeichnet, dass** der mindestens eine Bogen (13) eine links-rechts-Unsymmetrie aufweist.

10. Anordnung einer Front- und/oder Heckstruktur eines Kraftfahrzeugs, die einen Danner-Querträger und einen Stoßfänger aufweist, **dadurch gekennzeichnet, dass** sie ein Stützelement (12) nach einem der vorhergehenden Ansprüche aufweist, das zwischen dem Danner-Querträger und dem Stoßfänger angeordnet ist.

11. Kraftfahrzeug, **dadurch gekennzeichnet, dass** es eine Anordnung nach dem vorhergehenden Anspruch enthält.

12. Kraftfahrzeug nach dem vorhergehenden Anspruch, **dadurch gekennzeichnet, dass** die Anordnung so ist, dass mindestens ein Bogen (13) sich auf einer Höhe entsprechend dem Schienbein eines Fußgängers befindet.
